# EUROPÄISCHE PATENTSCHRIFT

(11) **EP 2 808 177 B1**
(45) Veröffentlichungstag und Bekanntmachung des Hinweises auf die Patenterteilung: **18.04.2018**
(21) Anmeldenummer: 14167085.1
(22) Anmeldetag: 06.05.2014
(51) Int. Cl.: B60C 5/14, B29B 7/74, B60C 1/00, B60C 17/00

(54) **Fahrzeugluftreifen mit Notlaufeigenschaften**
Runflat pneumatic vehicle tyre
Pneu de roulage à plat

(30) Priorität: 30.05.2013 DE 102013105581
(43) Veröffentlichungstag der Anmeldung: 03.12.2014
(73) Patentinhaber: Continental Reifen Deutschland GmbH, 30165 Hannover (DE)
(72) Erfinder: Sommer, Jürgen, 52249 Eschweiler (DE); Recker, Carla, 30167 Hannover (DE)
(74) Vertreter: Finger, Karsten

(56) Entgegenhaltungen:
- EP-A1- 1 428 691
- US-A1- 2012 160 388

## Beschreibung

Die Erfindung betrifft einen Fahrzeugluftreifen mit Notlaufeigenschaften, enthaltend einen profilierten Laufstreifen, einen mehrlagigen Gürtelverband, eine Innenschicht, eine Karkasse, die in den Wulstbereichen von axial innen nach axial außen um zugfeste Kerne und den Kernen aufsitzenden Kernprofilen als Karkasshochschläge herumgeführt ist und Seitenwände, innerhalb derer mindestens ein im Querschnitt mondsichelförmiges, über den Umfang der Seitenwand ringförmig geschlossenes Verstärkungsprofil angeordnet ist.

Derartige, im Pannenfall selbsttragende Fahrzeugluftreifen sind in verschiedenen Ausführungsformen hinreichend bekannt. Die im Bereich der Seitenwände des Reifens eingebrachten Verstärkungsprofile werden bezüglich ihrer Querschnittsform und ihrer elastomeren Mischungen derart ausgeführt, dass sie in der Lage sind, den Reifen bei einem Druckluftverlust im Pannenfall selbsttragend zu erhalten, so dass eine Weiterfahrt über eine gewisse Laufstrecke ermöglicht ist. Bei Druckluftverlust wird die Selbsttragefähigkeit des Notlaufreifens dadurch erreicht, dass das in der Reifenseitenwand angeordnete Verstärkungsprofil auf Kompression beansprucht wird, während die an dem Verstärkungsprofil anliegende Karkasse auf Zug beansprucht wird. Durch dieses Zusammenwirken von Karkasse und Verstärkungsprofil wird der Reifen selbsttragend und der Sitz des Wulstprofils auf der Felge bleibt erhalten. Diese Notlaufreifenkonstruktion ist als SSR-Reifen (Self Supporting RunFlat Tire) bekannt. Jedoch sind die auf das Verstärkungsprofil wirkenden Kräfte durch die Einfederung des Reifens, insbesondere aufgrund der Einfederung im Bereich der Bodenaufstandsfläche, enorm hoch. Bei den Notlaufreifen ist es daher oftmals problematisch, den Reifen im Notlauf über eine längere Fahrtstrecke selbsttragend zu erhalten. Denn das Material des Verstärkungsprofils ermüdet im Notlauf nach einer gewissen Fahrtstrecke und bricht. Um einen vorzeitigen Ausfall im Notlaufbetrieb zu verhindern, werden bei Notlaufreifen oftmals zweilagige Karkasskonstruktionen und stark ausgelegte Inserts eingesetzt. Diese Maßnahmen erhöhen zwar die im Pannenlauf erhaltene Fahrtstrecke, verteuern aber den Reifen durch vermehrten Materialeinsatz und einen aufwendigeren Reifenaufbau.

Es gibt daher im Stand der Technik Bestrebungen, an anderen Stellen im Fahrzeugluftreifen mit Notlaufeigenschaften Materialeinsparungen vorzunehmen. So wird in der EP 1970221 B1 ein Fahrzeugluftreifen beschrieben, dessen Innenschicht nicht durchgängig ist, sondern innerhalb der Querschnittshöhe des Verstärkungsprofils weggelassen wird, und der im normalen Fahrbetrieb eine ausreichende Luftdichtigkeit aufweist.

Allerdings zeigt ein derartiger Fahrzeugluftreifen nach einer Verletzung im Notlauf eine vergleichsweise geringe Haltbarkeit, da sich aufgrund der oben genannten mechanischen Beanspruchungen im Notlauf im Verstärkungsprofil Risse bilden können, wodurch der Fahrzeugreifen ohne Innenschicht innerhalb der Querschnittshöhe im Notlauf keine ausreichende Luftdichtigkeit mehr aufweist und zusätzlich dessen Haltbarkeit verringert ist.

Ferner können auch Fahrzeugluftreifen mit einer durchgängigen Innenschicht, deren Kautschukmischung üblicherweise durch den vergleichsweise teuren Halobutyl-Kautschuk auf Luftdichtigkeit optimiert ist, diese Art des Ausfalls zeigen, wobei sich aufgrund der mechanischen Beanspruchungen im Notlauf auch in der Innenschicht Risse bilden können. Die Luftdichtigkeit und Haltbarkeit des Fahrzeugluftreifens ist in der Folge dann nicht mehr gegeben.

Aus der EP1428691-A1 ist ein Fahrzeugluftreifen mit Notlaufeigenschaften gemäß dem Oberbegriff von Anspruch 1 bekannt. Es ist daher die Aufgabe der vorliegenden Erfindung, einen Fahrzeugluftreifen mit Notlaufeigenschaften bereitzustellen, der im Notlauf sowie im normalen Fahrbetrieb gute Fahreigenschaften und eine ausreichende Luftdichtigkeit aufweist, aber verglichen mit gattungsgemäßen Notlaufreifen kostengünstig in seiner Herstellung ist.

Die Aufgabe wird durch die Merkmalskombination des kennzeichnenden Teils von Anspruch 1 gelöst. Unter "Kautschukmischung A" wird im Rahmen der vorliegenden Erfindung eine Kautschukmischung verstanden, die wenigstens Halobutylkautschuk als Bestandteil enthält und daher auch als "halobutylkautschukhaltige Kautschukmischung" bezeichnet.

Unter "Kautschukmischung B" wird im Rahmen der vorliegenden Erfindung eine Kautschukmischung verstanden, die frei von Halobutylkautschuk ist. Unter frei von Halobutylkautschuk wird im Rahmen der vorliegenden Erfindung verstanden, dass die Kautschukmischung B 0 phr Halobutylkautschuk, also keinen Halobutylkautschuk, enthält. Der oben genannte erste Innenschichtabschnitt wird im Rahmen der vorliegenden Erfindung auch als zentraler Innenschichtabschnitt bezeichnet.

Dieser Abschnitt besteht aus der Kautschukmischung A. Der Einfachheit halber werden für diesen Abschnitt im Rahmen der vorliegenden Erfindung auch die Ausdrücke "Innenschichtabschnitt aus Halobutylkautschuk" oder "Innenschichtabschnitt aus einer halobutylkautschukhaltigen Kautschukmischung" oder "Innenschichtabschnitt aus der Kautschukmischung A" verwendet.

Die Kautschukmischung A kann dabei zusätzlich die in der Fachwelt üblichen Bestandteile für Kautschukmischungen der Innenschicht von Fahrzeugluftreifen aufweisen.

Der oben genannte zweite Innenschichtabschnitt besteht aus der Kautschukmischung B, die frei von Halobutylkautschuk ist. Der Einfachheit halber werden für diesen Abschnitt im Rahmen der vorliegenden Erfindung auch die Ausdrücke "Innenschichtabschnitt aus einer Kautschukmischung, die frei von Halobutylkautschuk ist " oder "Innenschichtabschnitt aus der Kautschukmischung B" verwendet.

Der erfindungsgemäße Fahrzeugluftreifen weist wenigstens einen Innenschichtabschnitt aus der Kautschukmischung B auf, der erfindungsgemäß wenigstens innerhalb der Querschnittshöhe eines Verstärkungsprofils liegt.

Erfindungswesentlich ist daher, dass die Innenschicht nicht durchgängig aus einer Kautschukmischung enthaltend Halobutylkautschuk ist, sondern in der Reifenquerschnittsbetrachtung zumindest innerhalb eines Bereiches der Querschnittshöhe zumindest eines Verstärkungsprofils einen Innenschichtabschnitt aus einer weiteren Kautschukmischung, im Rahmen der vorliegenden Anmeldung der Kautschukmischung B, aufweist, die frei von Halobutylkautschuk ist.
Überraschenderweise hat es sich gezeigt, dass der Fahrzeugluftreifen dennoch im normalen Fahrbetrieb und nach einer Verletzung von außen im Notlauf luftdicht ist, wobei die sonstigen Fahreigenschaften nicht nachteilig beeinträchtigt sind. Üblicherweise ist die luftdicht ausgeführte Innenschicht durchgängig aus einer halobutylkautschukhaltigen Kautschukmischung hergestellt. Dieser Kautschuk ist in der Anschaffung und durch seine Verarbeitung besonders teuer. Indem nun die Innenschicht des erfindungsgemäßen Fahrzeugluftreifens nicht mehr durchgängig aus Halobutylkautschuk gefertigt ist, sondern es wenigstens einen Bereich der Innenschicht aus einer weiteren Kautschukmischung gibt, in der auf diesen Kautschuk verzichtet ist, ist der Reifen durch diese Materialeinsparung in seiner Herstellung erheblich im Preis vergünstigt. Gleichzeitig weist der erfindungsgemäße Fahrzeugluftreifen im Vergleich zu Fahrzeugluftreifen mit Notlaufeigenschaften ohne eine durchgängige Innenschicht, wie in der EP 1970221 B1 beschrieben, eine ausreichende Luftdichtigkeit und Haltbarkeit im Notlauf auf.

Zusätzlich ist es bevorzugt, wenn die Kautschukmischung B, die frei von Halobutylkautschuk ist, zwar eine Luftdichtigkeit aufweist, aber zudem hinsichtlich der Reiß- und Ermüdungseigenschaften optimiert ist. Somit bilden sich im Notlauf trotz der hohen mechanischen Beanspruchungen keine oder nur in nicht signifikantem Maße Risse in der Innenschicht, und zwar insbesondere wenigstens innerhalb der Querschnittshöhe wenigstens eines Verstärkungsprofils. Hierdurch ergibt sich eine verbesserte Haltbarkeit des Fahrzeugluftreifens im Notlauf, was wiederum die Luftdichtigkeit des Fahrzeugluftreifens im Notlauf verstärkt. Die Verstärkungsprofile tragen ebenfalls zur Luftdichtigkeit bei. Bevorzugt enthält die Kautschukmischung wenigstens einen StyrolButadien-Kautschuk (SBR) und/oder wenigstens ein natürliches Polyisopren (NR), um eine ausreichende Reiß- und Ermüdungsresistenz aufzuweisen.

Unter dem Begriff "im Notlauf" wird im Rahmen der vorliegenden Erfindung der Fahrzustand verstanden, der im Pannenfall nach einer Verletzung des Fahrzeugluftreifens von außen eintritt. Eine Verletzung kann z.B. durch Nägel oder spitze Steine auftreten.

In einer vorteilhaften Ausführungsform der Erfindung ist der Fahrzeugluftreifen dergestalt, dass die Innenschicht im Querschnitt betrachtet aus drei Innenschichtabschnitten besteht und zwar derart, dass die Innenschicht einen zentralen Innenschichtabschnitt aus der Kautschukmischung A und auf beiden axialen Seiten jeweils einen seitlichen Innenschichtabschnitt aus der Kautschukmischung B aufweist, der sich auf jeder Seite vom Überlappungsbereich mit dem zentralen Innenschichtabschnitt bis radial unterhalb jedes Wulstbereiches erstreckt, wobei die Kautschukmischung B frei von Halobutylkautschuk ist.
Mit dieser Ausführungsform ist ein Notlaufreifen geschaffen, der wenigstens innerhalb der Querschnittshöhen der Verstärkungsprofile beider Seiten je einen Innenschichtabschnitt aus einer Kautschukmischung aufweist, die frei ist von Halobutylkautschuk. Hierdurch sind in diesen Abschnitten der Innenschicht Kosten an dem teuren Halobutylkautschuk eingespart. Zusätzlich weist der Fahrzeugluftreifen dieser Ausführungsform eine über den Querschnitt in axialer Richtung gleichmäßige Materialverteilung auf. Die Luftdichtigkeit in diesen seitlichen Abschnitten ist durch das Zusammenwirken der Verstärkungsprofile mit den Innenschichtabschnitten aus der Kautschukmischung B gewährleistet.
Besonders bevorzugt ist es auch hier, wenn die Kautschukmischung B durch die oben genannten Bestandteile neben der Luftdichtigkeit hinsichtlich der Reiß- und Ermüdungsresistenz optimiert ist.

In einer weiteren vorteilhaften Ausführungsform der Erfindung ist der Fahrzeugluftreifen dergestalt, dass die Innenschicht, im Querschnitt betrachtet, aus fünf Innenschichtabschnitten besteht und zwar derart, dass die Innenschicht einen zentralen Innenschichtabschnitt aus der Kautschukmischung A und auf beiden axialen Seiten jeweils einen seitlichen Innenschichtabschnitt aus der Kautschukmischung B aufweist und auf beiden axialen Seiten jeweils einen seitlichen Innenschichtabschnitt aus der Kautschukmischung A aufweist, wobei sich die seitlichen Innenschichtabschnitte aus der Kautschukmischung A auf jeder Seite vom Überlappungsbereich mit den seitlichen Innenschichtabschnitten aus der Kautschukmischung B bis radial unterhalb jedes Wulstbereiches erstrecken, und wobei sich die seitlichen Innenschichtabschnitte aus der Kautschukmischung B auf jeder Seite vom Überlappungsbereich mit dem zentralen Innenschichtabschnitt bis zum Überlappungsbereich mit den seitlichen Innenschichtabschnitten aus der Kautschukmischung A erstrecken.
Besonders bevorzugt ist es auch hier, wenn die Kautschukmischung B durch die oben genannten Bestandteile neben der Luftdichtigkeit hinsichtlich der Reiß- und Ermüdungsresistenz optimiert ist. In dieser Ausführungsform der Erfindung wird in den Bereichen der Abschnitte aus der Kautschukmischung B der teure Halobutylkautschuk eingespart, während gleichzeitig in den Wulstbereichen durch die dort vorhandene Kautschukmischung A der Innenschichtabschnitte eine besonders hohe Luftdichtigkeit gesichert ist.

Zweckmäßig ist es, wenn wenigstens ein Überlappungsbereich zwischen dem zentralen Innenschichtabschnitt aus der Kautschukmischung A mit wenigstens einem Innenschichtabschnitt aus der Kautschukmischung B von der Gürtelkante der radial innersten Gürtellage nach radial innen projiziert am oberen Ende eines Verstärkungsprofils angeordnet ist. Somit ist sichergestellt, dass durch das Überlappen des zentralen Innenschichtabschnittes aus der Kautschukmischung A mit dem radial oben auslaufenden und sich materialverdünnenden Verstärkungsprofil die Luftdichtheit des Reifens gewährleistet ist. Gleichzeitig ist die Kautschukmischung B somit über einen möglichst breiten Bereich innerhalb der Querschnittshöhe des Verstärkungsprofils angeordnet, wodurch sich die Einsparung des Halobutylkautschuks besonders günstig auswirkt.

Unter "oberem Ende des Verstärkungsprofils" ist im Rahmen der vorliegenden Erfindung der Bereich des Verstärkungsprofils zu verstehen, der dem Laufstreifen am nächsten ist und unterhalb der Gürtelkante der radial innersten Gürtellage materialverdünnend ausläuft. Unter "unterem Ende des Verstärkungsprofils" ist im Rahmen der vorliegenden Erfindung der Bereich des Verstärkungsprofils zu verstehen, der dem Wulst am nächsten ist und entlang der spitzen Kernprofile materialverdünnend ausläuft.

Ferner ist es für den Fall der oben beschriebenen Ausführungsform mit fünf Innenschichtabschnitten zweckmäßig, wenn der Überlappungsbereich zwischen den seitlichen Innenschichtabschnitten aus der Kautschukmischung B mit den seitlichen Innenschichtabschnitten aus der Kautschukmischung A am radial unteren Ende des Verstärkungsprofils angeordnet ist. Hierdurch ist eine besonders hohe Luftdichtigkeit in den Wulstbereichen sichergestellt.

Im Rahmen der vorliegenden Erfindung ist unter "Überlappungsbereich" der Bereich zu verstehen, in dem sich wie beschrieben die Kautschukmischungen berühren und/oder überlappen. Hierbei ist mit Überlappungsbereich auch der Fall abgedeckt, dass sich die Kanten der Kautschukmischungen nebeneinander berühren ohne übereinander zu liegen, was in der Fachwelt auch als "stumpfer Splice" (butt splice) bezeichnet wird. Die Überlappung ist in diesem Fall null, wird aber der Einfachheit halber im Rahmen der vorliegenden Erfindung ebenfalls als Überlappung bezeichnet.
Ferner kann der Berührungsbereich bzw. Überlappungsbereich zwischen zwei Kautschukmischungen der Innenschicht auch mit einer welligen und/oder gezackten Verlaufslinie ausgeführt sein. Dies gilt sowohl für den Fall des stumpfen Splices, als auch für die Kanten der Kautschukmischungen bei einem Überlappungsbereich von größer als Null.

Der Grad der notwendigen Überlappung hängt in den genannten Ausführungsformen der Erfindung von der luftdichten Wirkung der gewählten Kautschukmischung des Verstärkungsprofils ab.

Weitere Merkmale, Vorteile und Einzelheiten der Erfindung werden anhand der Zeichnungen, die schematische Ausführungsbeispiele darstellen, näher erläutert. Es zeigen die:
- Fig.1: einen schematischen nicht erfindungsgemäßen Querschnitt durch einen Fahrzeugluftreifen mit Notlaufeigenschaften für Personenkraftwagen;
- Fig.2: einen schematischen Querschnitt durch einen anderen Fahrzeugluftreifen mit Notlaufeigenschaften für Personenkraftwagen.

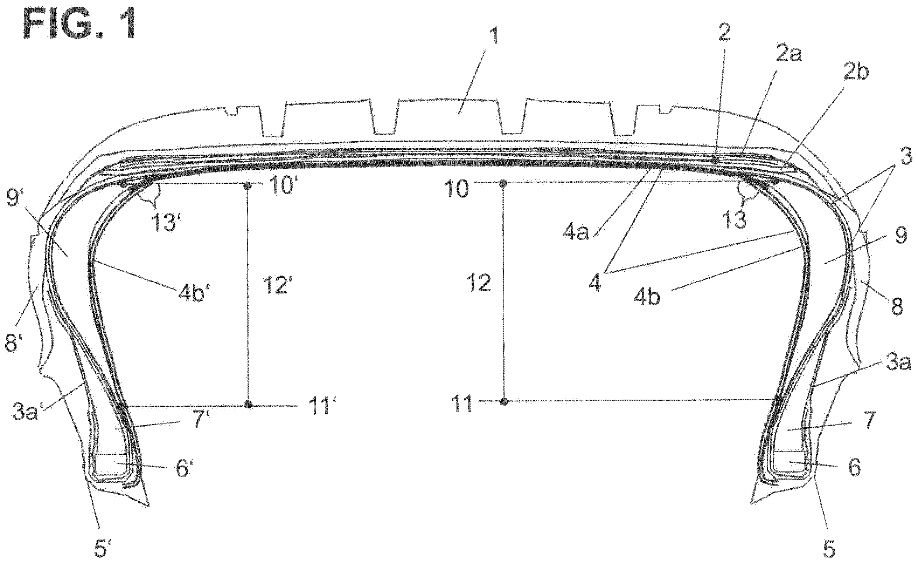

Gemäß dem in **Fig. 1** gezeigten schematischen nicht erfindungsgemäßen Querschnitt eines Fahrzeugluftreifens mit Notlaufeigenschaften für Personenkraftwagen sind die wesentlichen Bestandteile, aus welchen sich der dargestellte Fahrzeugluftreifen zusammensetzt: ein profilierter Laufstreifen 1, ein bei der gezeigten Ausführung aus zwei Lagen 2a, 2b bestehender Gürtel 2, wobei die Lage 2b die radial innerste Gürtellage darstellt, und eine zweilagig ausgeführte Karkasse 3, eine mehrteilige Innenschicht 4a, 4b, 4b', Wülste 5, 5' mit Wulstkernen 6, 6' und Wulstkernprofilen 7, 7', sowie Seitenwände 8, 8' und etwa mondsichelförmige, aus elastomerem Material, insbesondere aus einer Kautschukmischung, hergestellte Verstärkungsprofile 9, 9'. Die beiden Lagen 2a und 2b des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 20° und 35° einschließen. Die im Querschnitt seitlichen Enden der Gürtellagen sind die Gürtelkanten, welche in den Schulterbereich des Reifens hineinragen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Karkasse 3 ist um die Wulstkerne 6, 6' von axial innen nach axial außen geführt, ihre Hochschläge 3a, 3a' verlaufen neben den Wulstkernprofilen 7, 7' in Richtung Gürtel 2. Die Dicke (axiale Breite) der Verstärkungsprofile 9, 9' nimmt sowohl Richtung Gürtel 2 als auch Richtung Wulst 5, 5' ab und läuft somit dort materialverdünnend aus. Richtung Gürtel 2 reichen die Verstärkungsprofile 9, 9' bis unter die Randbereiche desselben. Richtung Wulst 5, 5' enden die Verstärkungsprofile 9, 9' knapp oberhalb der Wulstkerne 6, 6'. Über den überwiegenden Bereich der Länge der Seitenwand sind die Verstärkungsprofile 9, 9' nahezu konstant dick ausgeführt, die Stärken betragen 6 bis 15mm. Wesentlich ist nun, dass die Innenschicht 4 nicht durchgängig aus einer halobutylkautschukhaltigen Kautschukmischung den Reifeninnenraum auskleidet. Sondern die Innenschicht 4 besteht aus drei einander berührenden Innenschichtabschnitten 4a, 4b, 4b' und zwar derart, dass die Innenschicht einen zentralen Innenschichtabschnitt 4a aus der Kautschukmischung A und auf beiden axialen Seiten jeweils einen seitlichen Innenschichtabschnitt aus der Kautschukmischung B 4b, 4b' aufweist, der sich auf jeder Seite vom Überlappungsbereich 13, 13' mit dem zentralen Innenschichtabschnitt 4a bis radial unterhalb jedes Wulstbereiches 5, 5' erstreckt, wobei die Kautschukmischung B frei von Halobutylkautschuk ist. Erfindungswesentlich ist ebenfalls, dass die seitlichen Innenschichtabschnitte 4b, 4b' innerhalb der Querschnittshöhen 12, 12' der Verstärkungsprofile 9, 9' liegt. Der Innenschichtabschnitt 4a ist unterhalb des LaufstreifenBereiches des Reifens angeordnet und liegt mit seinen im Querschnitt seitlichen Enden jeweils von der Gürtelkante der radial innersten Gürtellage 2b nach radial innen projiziert am oberen Ende 10, 10' eines Verstärkungsprofils 9, 9'. Somit liegen auch die Überlappungsbereiche 13, 13' zwischen dem zentralen Innenschichtabschnitt 4a und den seitlichen Innenschichtabschnitten 4b, 4b' am oberen Ende 10, 10' des Verstärkungsprofils 9, 9'. In dieser erfindungsgemäßen Ausführungsform wird über den breiten Bereich, den die Innenschichtabschnitte aus der Kautschukmischung B abdecken, der vergleichsweise teure Halobutylkautschuk eingespart. Gleichzeitig ist eine ausreichende Luftdichtigkeit des Fahrzeugluftreifens im normalen Fahrbetrieb und im Notlauf gewährleistet.

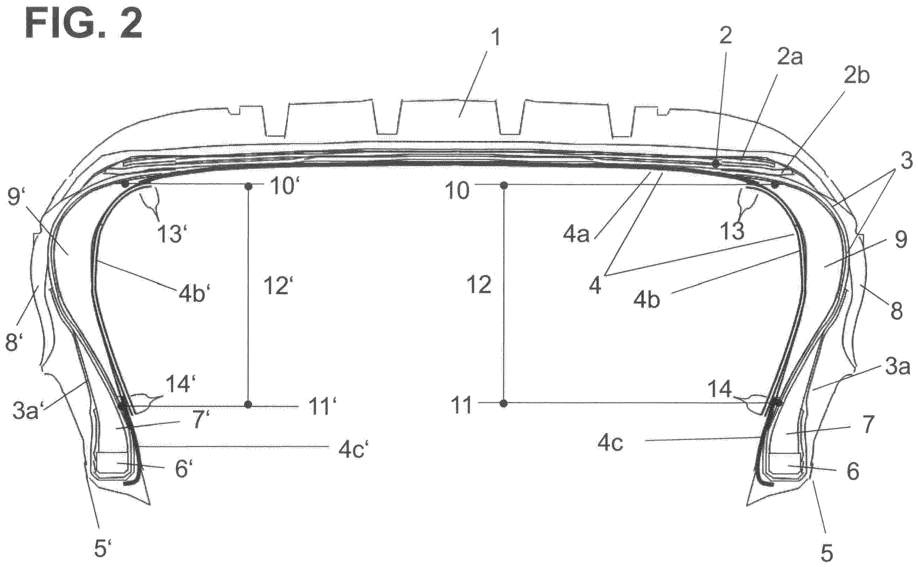

Die **Fig.2** zeigt einen erfindungsgemäßen schematischen Querschnitt eines Fahrzeugluftreifens mit Notlaufeigenschaften für Personenkraftwagen. Gleiche Bauteile des in Fig. 1 dargestellten Fahrzeugluftreifens sind mit gleichen Bezugsziffern benannt. Der im Querschnitt der Fig.2 dargestellte Fahrzeugluftreifen mit Notlaufeigenschaften unterscheidet sich von dem Fahrzeugluftreifen mit Notlaufeigenschaften der Fig.1 dadurch, dass die Innenschicht 4, im Querschnitt betrachtet, aus fünf Innenschichtabschnitten 4a, 4b, 4b', 4c, 4c' besteht und zwar derart, dass die Innenschicht einen zentralen Innenschichtabschnitt 4a aus der Kautschukmischung A und auf beiden axialen Seiten jeweils einen seitlichen Innenschichtabschnitt aus der Kautschukmischung B 4b, 4b' und auf beiden axialen Seiten jeweils einen seitlichen Innenschichtabschnitt aus der Kautschukmischung A 4c, 4c' aufweist, wobei sich die seitlichen Innenschichtabschnitte aus der Kautschukmischung A 4c, 4c' auf jeder Seite vom Überlappungsbereich 14, 14' mit den seitlichen Innenschichtabschnitten aus der Kautschukmischung B 4b, 4b' bis radial unterhalb jedes Wulstbereiches 5, 5' erstrecken, und wobei sich die seitlichen Innenschichtabschnitte aus der Kautschukmischung B 4b, 4b' auf jeder Seite vom Überlappungsbereich 13, 13' mit dem zentralen Innenschichtabschnitt 4a bis zum Überlappungsbereich 14, 14' mit den seitlichen Innenschichtabschnitten aus der Kautschukmischung A 4c, 4c' erstrecken. Die Überlappungsbereiche 14, 14' sind an den unteren Enden der Verstärkungsprofile angeordnet. In dieser Ausführungsform der Erfindung wird in den Bereichen der Abschnitte aus der Kautschukmischung B der teure Halobutylkautschuk eingespart, während gleichzeitig in den Wulstbereichen 5, 5' durch die dort vorhandene Kautschukmischung A der Innenschichtabschnitte 4c, 4c' eine besonders hohe Luftdichtigkeit gesichert ist.

### Bezugszeichenliste

### (Teil der Beschreibung)

- 1: Laufstreifen
- 2: Mehrlagiger Gürtelverband
- 2a: Gürtellage
- 2b: Radial innerste Gürtellage
- 3: Karkasse
- 3a, 3a': Karkasshochschläge
- 4: Innenschicht
- 4a, 4b, 4b', 4c, 4c': Innenschichtabschnitte
- 5, 5': Wulstbereiche
- 6, 6': Wulstkerne
- 7, 7': Kernprofile
- 8, 8': Seitenwände
- 9, 9': Verstärkungsprofile
- 10, 10': Obere Enden der Verstärkungsprofile
- 11, 11': Untere Enden der Verstärkungsprofile
- 12, 12': Querschnittshöhen der Verstärkungsprofile
- 13, 13': Überlappungsbereich zwischen den Innenschichtabschnitten 4a und 4b bzw. 4a und 4b'
- 14, 14': Überlappungsbereich zwischen den Innenschichtabschnitten 4b und 4c bzw. 4b' und 4c'

## Patentansprüche

1. Fahrzeugluftreifen mit Notlaufeigenschaften,
enthaltend einen profilierten Laufstreifen (1), einen mehrlagigen Gürtelverband (2), eine Innenschicht (4) aus wenigstens zwei einander in wenigstens einem Überlappungsbereich berührenden Innenschichtabschnitten (4a, 4b) aus verschiedenen Kautschukmischungen, eine Karkasse (3), die in den Wulstbereichen (5, 5') von axial innen nach axial außen um zugfeste Kerne (6, 6') und den Kernen aufsitzenden Kernprofilen (7, 7') als Karkasshochschläge (3a, 3a') herumgeführt ist und Seitenwände (8, 8'), innerhalb derer mindestens ein im Querschnitt mondsichelförmiges, über den Umfang der Seitenwand ringförmig geschlossenes Verstärkungsprofil (9, 9') angeordnet ist,
**dadurch gekennzeichnet,**
**dass** die Innenschicht (4), im Querschnitt betrachtet, aus fünf Innenschichtabschnitten (4a, 4b, 4b', 4c, 4c') besteht und zwar derart, dass die Innenschicht einen zentralen Innenschichtabschnitt (4a) aufweist, der radial innen unterhalb des Laufstreifenbereiches angeordnet ist und eine halobutylkautschukhaltige Kautschukmischung A enthält, und die Innenschicht auf beiden axialen Seiten jeweils einen seitlichen Innenschichtabschnitt aus wenigstens einer Kautschukmischung B (4b, 4b'), die frei von Halobutylkautschuk ist, und auf beiden axialen Seiten jeweils einen seitlichen Innenschichtabschnitt aus der Kautschukmischung A (4c, 4c') aufweist, wobei sich die seitlichen Innenschichtabschnitte aus der Kautschukmischung A (4c, 4c') auf jeder Seite von einem Überlappungsbereich (14, 14') mit den seitlichen Innenschichtabschnitten aus der Kautschukmischung B (4b, 4b') bis radial unterhalb jedes Wulstbereiches (5, 5') erstrecken, und wobei sich die seitlichen Innenschichtabschnitte aus der Kautschukmischung B (4b, 4b') auf jeder Seite von Jeweils einem weiteren Überlappungsbereich (13, 13') mit dem zentralen Innenschichtabschnitt (4a) aus der Kautschukmischung A, der von dem jeweils anderen weiteren Überlappungsbereich (13, 13') mit dem zentralen Innenschichtabschnitt (4a) auf der anderen axialen Seite getrennt und entfernt ist,
bis zum Überlappungsbereich (14, 14') mit den seitlichen Innenschichtabschnitten aus der Kautschukmischung A (4c, 4c') erstrecken.

2. Fahrzeugluftreifen nach Anspruch 1,
**dadurch gekennzeichnet,**
**dass** wenigstens ein Überlappungsbereich (13, 13') zwischen den Innenschichtabschnitten (4a, 4b, 4b') am oberen Ende (10, 10') des Verstärkungsprofils (9) angeordnet ist.

3. Fahrzeugluftreifen nach Anspruch 1 oder 2,
**dadurch gekennzeichnet,**
**dass** wenigstens ein Überlappungsbereich (14, 14') zwischen den Innenschichtabschnitten (4b, 4b', 4c, 4c')) am unteren Ende (11, 11') des Verstärkungsprofils (9) angeordnet ist.

## Claims

1. Pneumatic vehicle tyre with run-flat properties, comprising a profiled tread (1), a multi-ply belt assembly (2), an inner layer (4) composed of at least two inner layer sections (4a, 4b) which make contact in at least one overlap region and which are composed of different rubber mixtures, a carcass (3) which in the bead regions (5, 5') is led, as carcass turn-ups (3a, 3a'), from axially inside to axially outside around tension-resistant cores (6, 6') and around core profiles (7, 7') seated on the cores, and side walls (8, 8') within which there is arranged at least one reinforcement profile (9, 9') which is of crescent-shaped cross section and which is closed in ring-shaped fashion over the circumference of the side wall,
**characterized**
**in that** the inner layer (4), as viewed in cross section, is composed of five inner layer sections (4a, 4b, 4b', 4c, 4c'), specifically such that the inner layer has a central inner layer section (4a) which is arranged radially at the inside below the tread region and which comprises a halobutyl-rubber-containing rubber mixture A, and the inner layer has, on both axial sides, in each case one lateral inner layer section composed of at least one rubber mixture B (4b, 4b') which is free from halobutyl rubber, and, on both axial sides, in each case one lateral inner layer section composed of the rubber mixture A (4c, 4c'), wherein the lateral inner layer sections composed of the rubber mixture A (4c, 4c') extend on each side from an overlap region (14, 14') with the lateral inner layer sections composed of the rubber mixture B (4b, 4b') as far as radially below each bead region (5, 5'), and wherein the lateral inner layer sections composed of the rubber mixture B (4b, 4b') extend on each side from in each case one further overlap region (13, 13') with the central inner layer section (4a) composed of the rubber mixture A, which is separate and remote from the respective other further overlap region (13, 13') with the central inner layer section (4a) on the other axial side, as far as the overlap region (14, 14') with the lateral inner layer sections composed of the rubber mixture A (4c, 4c').

2. Pneumatic vehicle tyre according to Claim 1,
**characterized**
**in that** at least one overlap region (13, 13') between the inner layer sections (4a, 4b, 4b') is arranged at the upper end (10, 10') of the reinforcement profile (9).

3. Pneumatic vehicle tyre according to Claim 1 or 2,
**characterized**
**in that** at least one overlap region (14, 14') between the inner layer sections (4b, 4b', 4c, 4c') is arranged at the lower end (11, 11') of the reinforcement profile (9).

## Revendications

1. Bandage pneumatique pour roulage à plat, contenant une bande de roulement profilée (1), un ensemble de ceinture (2) en plusieurs couches, une couche intérieure (4) constituée d'au moins deux parties (4a, 4b) de couche intérieure qui se touchent mutuellement en au moins une zone de superposition et constituées de mélanges de caoutchoucs différents, une carcasse (3) qui s'enroule axialement de l'intérieur à l'extérieur dans les parties de bourrelet (5, 5') autour d'âmes (6, 6') résistant à la traction et de profilés d'âmes (7, 7') reposant sur les âmes, sous la forme de rabats (3a, 3a') de carcasse, et des parois latérales (8, 8') à l'intérieur desquelles est disposé au moins un profilé de renfort (9, 9') dont la section transversale a la forme d'un croissant de lune et fermé en anneau à la périphérie de la paroi latérale,
**caractérisé en ce que**
la couche intérieure (4) vue en coupe transversale est constituée de cinq parties (4a, 4b, 4b', 4c, 4c') de couche intérieure, la couche intérieure présentant une partie centrale (4a) de couche intérieure disposée radialement à l'intérieur en dessous de la zone occupée par la bande de roulement et contenant un mélange A de caoutchouc contenant du caoutchouc butyle halogéné,
**en ce que** la couche intérieure située sur les deux côtés axiaux est une partie latérale de couche intérieure constituée d'au moins un mélange B de caoutchouc (4b, 4b') qui ne présente pas de caoutchouc butyle halogéné et qui présente sur chacun des deux côtés axiaux une partie latérale de couche intérieure constituée du mélange A de caoutchouc (4c, 4c'),
**en ce que** les parties latérales de couche intérieure en mélange de caoutchouc A (4c, 4c') s'étendent sur chaque côté d'une zone de superposition (14, 14') avec les parties latérales de couche intérieure en mélange de caoutchouc B (4b, 4b') jusque radialement en dessous de chaque zone de bourrelet (5, 5') et
**en ce que** les parties latérales de couche intérieure en mélange de caoutchouc B (4b, 4b') s'étendent jusqu'à la zone de superposition (14, 14') avec les parties latérales de couche intérieure en mélange de caoutchouc A (4c, 4c') de chaque côté d'une autre zone de superposition (13, 13') avec la partie centrale (4a) de couche intérieure en mélange de caoutchouc A qui est séparée et éloignée de l'autre partie de superposition (13, 13') avec la partie centrale (4a) de couche intérieure de l'autre côté axial.

2. Bandage pneumatique pour roue de véhicule selon la revendication 1, **caractérisé en ce qu'**au moins une zone de superposition (13, 13') est disposée entre les parties (4a, 4b, 4b') de couche intérieure à l'extrémité supérieure (10, 10') du profilé de renfort (9) .

3. Bandage pneumatique pour roue de véhicule selon les revendications 1 ou 2, **caractérisé en ce qu'**au moins une zone de superposition (14, 14') est disposée entre les parties (4b, 4b', 4c, 4c") de couche intérieure à l'extrémité supérieure (11, 11') du profilé de renfort (9).
